(19) Europäisches Patentamt / European Patent Office / Office européen des brevets

(11) **EP 1 852 808 A1**

(12) **EUROPEAN PATENT APPLICATION**
published in accordance with Art. 158(3) EPC

(43) Date of publication:
**07.11.2007 Bulletin 2007/45**

(51) Int Cl.:
**G06K 19/00** (2006.01)   **B42D 15/10** (2006.01)
**G06K 19/07** (2006.01)   **G06K 19/073** (2006.01)

(21) Application number: **06714312.3**

(22) Date of filing: **22.02.2006**

(86) International application number:
**PCT/JP2006/303172**

(87) International publication number:
**WO 2006/090739 (31.08.2006 Gazette 2006/35)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **23.02.2005 JP 2005047991**
**16.12.2005 JP 2005363903**

(71) Applicant: **Taiyo, Inc.**
**Shibukawa-shi, Gunma 377-0005 (JP)**

(72) Inventor: **KIYOZUKA, Toru**
**Gunma, 3770005 (JP)**

(74) Representative: **Becker, Eberhard**
**Patentanwälte**
**Becker, Kurig, Straus**
**Bavariastrasse 7**
**80336 München (DE)**

(54) **CARD WITH FUNCTION OF PREVENTING SKIMMING OF RFID, AND A CARD HOLDER**

(57)    There are disclosed a card and a card holder with a skimming preventive function for RFID. A card 1 with the skimming preventive function includes a metal thin plate 2 and decorative plates 3a, 3b formed on front and back surfaces of the metal thin plate by lamination processing. The card 1 is constantly carried together with a non-contact IC card 4. When a card reader 5 or a skimmer is to read information recorded in the non-contact IC card 4, an eddy current is generated in the metal thin plate 2, and a diamagnetic field (B) 7 generated by the eddy current cancels a magnetic field from the reader 5 or the skimmer. Therefore, the non-contact IC card 4 is not started. Furthermore, when this card 1 is fitted into a card holder 10 and the IC card 4 is stored in the card holder 10, skimming is prevented when carried, and the information recorded in the IC card 4 can easily be read when used.

[FIG.3]

## Description

Technical Field

The present invention relates to a card and a card holder with a skimming preventive function for radio frequency identification (RFID) of a non-contact IC card. More specifically, it relates to a card capable of providing a skimming preventive function and a promotion effect when carried together with a non-contact IC card or the like, and a card holder which allows RFID stored in the holder to easily be used if necessary. The card holder can prevent skimming when not used and can foster reading of stored information when used.

Background Art

As one of the advertising medium for a company name, a company product and etc., promotion cards printed with advertisement have been introduced. It is common for such promotion cards to be placed in restaurants so as to be carried away or distributed for free in places where many people gather such as station vicinities and in event sites.
However, since many of the promotion cards are discarded immediately after distribution, it is difficult to achieve advertising effects thereby. Consequently, promotion cards have been devised by adding functions and privileges as well as the advertisement to impart practicality to the cards so that they can be held over a long period and maintain the advertising effect.
For example, a promotion card disclosed in Patent Document 1 has an advertisement thereon and an oral refreshing agent that is separably provided from the card. In this way, the promotion card is held and the advertising effect can be maintained until its owner takes the oral refreshing.
In addition, the promotion card of Patent Document 1 is provided with perforations so that an advertisement portion of the card can be left for the owner even after the oral refreshing agent is taken. However, owing to these perforations, only the refreshing agent might be left, and the advertisement portion of the card might be discarded instead. Moreover, a refreshing agent such as chewing gum is indeed preservable food, but it impairs its flavor with an elapse of a long time. Thus, the card can be distributed for a limited period of time.
Therefore, it is preferable to provide a card which is retainable and practical for a user so that it can be held over the long period.
The inventor has realized that the promotion cards have size substantially equal to that of a bank card etc. kept and carried in a wallet or the like, and has considered to utilize the promotion cards for a purpose of preventing skimming. In particular, there have been in recent years an urgent social needs to prevent the skimming of rapidly spreading non-contact IC cards. Accordingly, the inventor has thought to provide the promotion cards with a skimming preventive function for the non-contact IC card.
[Patent Document 1] Japanese Utility Model Registration No. 3058730
[Patent Document 2] Japanese Utility Model Registration No. 3066214
[Patent Document 3] Japanese Utility Model Registration No. 3106094

Disclosure of the Invention

Problems to be Solved by the Invention

For the purpose of the skimming prevention for the non-contact IC card, an envelope for sending the non-contact IC card according to Patent Document 2 and a portable pouch according to Patent Document 3 have been devised. However, in the former case, the skimming cannot be prevented after the completion of delivery of the non-contact IC card to a consumer. In the latter case, since the card is formed of a special material, not only costs increase but there is also a problem that users have to replace a presently used bag or the like by purchase.
Moreover, when techniques of shielding an electromagnetic wave and magnetism are used to prevent the skimming as disclosed in Patent Documents 2 and 3, a sufficient effect cannot be obtained, depending on a frequency of the electromagnetic wave generated by a skimmer (a device which illegally reads information recorded in the card).

Means for Solving the Problems

In view of the above-mentioned problems, according to the present invention, there is provided a card with a skimming preventive function for RFID, comprising a metal thin plate and decorative plates formed on front and back surfaces of the metal thin plate by lamination processing. The metal thin plate has a thickness of 35 to 100 $\mu$m, and is characterized in that a magnetic intensity decay ratio at a frequency of 13.56 MHz is -9.54 dB or less according to measurement of ISO/IEC10373.

In this card, the metal thin plate is made of one of gold, silver, copper and aluminum.

The decorative plates are made of polyethylene terephthalate (PET) or polyvinyl chloride (PVC).

According to the present invention, there is further provided a card holder to which a card with a skimming preventive function for RFID is attached to prevent illegal reading of the RFID from a non-contact IC card or the like kept therein, the card comprising: a metal thin plate having a thickness of 35 to 100 $\mu$m and having a magnetic intensity decay ratio at a frequency of 13.56 MHz which is -9.54 dB or less according to measurement of ISO/IEC10373; and decorative plates formed on front and back surfaces of the metal thin plate by lamination processing. This card holder has, in a container consisting of a lid portion and a bottom portion and having an opening, a slide portion movable in a direction of the opening, urging means which has opposite end portions each of which engaged with the bottom portion and the slide portion and which moves the slide portion, and a stopper which stops the movement of the slide portion at a predetermined position in the container. The card with the skimming preventive function for the RFID is attached to the lid portion, a metal thin plate identical to that for use in the card with the skimming preventive function for the RFID is attached to the bottom portion, and a ferrite plate is attached to the slide portion. In an open state in which the slide portion has been moved, the ferrite plate fosters the reading of the RFID by a reader. In a closed state in which the slide portion is stored in the container, the card with the skimming preventive function for the RFID and the metal thin plate prevent the reading of the RFID.

In this card holder, the ferrite plate to be attached to the slide portion has an amplification factor of 1.584 dB to 4.082 dB.

Advantages of the Invention

According to the skimming preventive card for the RFID of the present invention, there is a large advantage that the skimming of RFID such as non-contact IC cards is prevented. This enables the card to be kept for a long period to achieve a persistent promotion effect.

Moreover, by carrying the skimming preventive card together with the non-contact IC card or the like in a purse, the card holder or etc., the skimming can easily be prevented. Since the skimming preventive card produces an effect simply by being carried, a bag, the wallet or the like does not have to be newly purchased. In addition, when the card is distributed for free in the same manner as in a conventional promotion card, no financial burden is imposed on a user.

Furthermore, according to the card holder of the present invention, the reading of the information recorded in the non-contact IC card kept in the holder can be prevented when carried. When in use, a simple operation allows this information to temporarily be read. Since the card with advertisement or the like printed thereon and the skimming preventive function is fitted replaceably on the card holder, it is possible to attach the card with different design in accordance with user's taste to improve a decorative property. In addition, when the non-contact IC card is used, the card holder fosters the reading of the recorded information by the reader.

Brief Description of the Drawings

FIG. 1 is a schematic sectional view of a skimming preventive card for RFID according to the present invention;
FIG. 2 is a schematic diagram showing an operation of a common non-contact IC card and a non-contact IC card reader;
FIG. 3 is a schematic diagram showing an embodiment of skimming prevention by use of the skimming preventive card for RFID according to the present invention;
FIG. 4 is a schematic diagram showing a measurement experiment of a decay ratio;
FIG. 5 is a diagram showing a decay ratio in accordance with a thickness of aluminum;
FIG. 6 is a diagram showing distance dependence of a received voltage of ferrite and aluminum;
FIG. 7 is a perspective view of a card holder according to the present invention;
FIG. 8 is an exploded perspective view of the card holder according to the present invention; and
FIG. 9 is a diagram showing a relation between the thickness of ferrite and an amplification factor.

Description of Reference Numerals

1     card
2     metal thin plate
3a    decorative plate
3b    decorative plate

| | |
|---|---|
| 4 | non-contact IC card (card-side coil, reception antenna) |
| 5 | non-contact IC card reader (reader-side coil, transmission antenna) |
| 6 | diamagnetic field (A) |
| 7 | diamagnetic field (B) |
| 8 | magnetic field |
| 9 | eddy current |
| 10 | card holder |
| 100 | test piece |
| 11 | lid portion |
| 110 | claw portion |
| 12 | slide portion |
| 120 | holding claw |
| 121 | first stopper |
| 122 | second stopper |
| 123 | ferrite |
| 13 | bottom portion |
| 130 | concave portion |
| 131 | first spring |
| 132 | second spring |
| 133 | aluminum plate |
| 134 | stopper receiving portion |
| 14 | button |
| 15 | pillar (A) |
| 16 | pillar (B) |

Best Mode for Carrying out the Invention

An embodiment of the present invention will be described with reference to the drawings.
First, an operation of a reader or a skimmer for reading information recorded in a non-contact IC card will briefly be described.

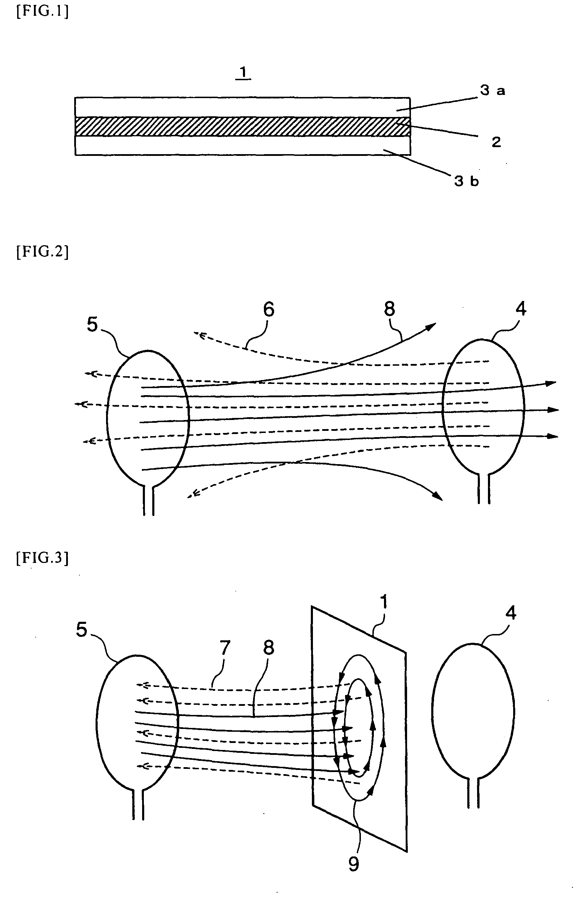

FIG. 2 shows an antenna coil 5 of a non-contact IC card reader, a magnetic field 8 generated by the coil 5, an antenna coil 4 of the non-contact IC card and a diamagnetic field (A) 6 generated by this coil.
In a currently common non-contact IC card, communication is not started from a card side in order to prevent cross talk. The reader periodically transmits a request command signal, and the card responds to this signal.

When a current flows through the reader-side coil 5, the magnetic field 8 is generated, and a part of the magnetic field 8 passes through the coil 4 on the side of the non-contact IC card. At this time, a magnetic flux is converted into a current in the card-side coil 4 and utilized as a power source of an IC. A magnetic field (the diamagnetic field (A) 6) having a direction reverse to that of the magnetic field 8 from the reader 5 is generated. In consequence, a response to the request command signal of the reader 5 is made.

FIG. 1 shows a schematic sectional view of a card 1 with a skimming preventive function for the non-contact IC card according to the present invention. As shown, the card 1 includes a metal thin plate 2, and decorative plates 3a and 3b. One of gold, silver, copper and aluminum is used for the metal thin plate 2, and the metal thin plate 2 is subjected to lamination processing by use of polyethylene terephthalate (PET) or polyvinyl chloride (PVC) to form the decorative plates 3a and 3b. The metal thin plate 2 will further be described later.

As shown in FIG. 3, when the card 1 is disposed close to the non-contact IC card 4 and receives the magnetic field 8 generated by the reader 5, an eddy current 9 is generated in the metal thin plate 2 of the card 1. By this eddy current 9, a diamagnetic field (B) 7 which cancels the magnetic field 8 of the reader 5 is generated, and the non-contact IC card 4 is not started. Therefore, information recorded in the non-contact IC card 4 is not read.

When the eddy current is utilized in this manner, skimming of the non-contact IC card 4 can be prevented. However, the eddy current generated in the metal thin plate 2 varies with a thickness, relative magnetic permeability and electric conductivity of the metal. An appropriate degree of the eddy current has not heretofore been known for preventing the reading of the information recorded in the non-contact IC card by not starting an IC chip as in the present invention.

To start a proximity IC card provided with a cryptographic coprocessor, a magnetic intensity of 4A/m is required. According to IS014443 and IS018092, the maximum magnetic intensity is set to 12 A/m. If the magnetic intensity exceeds this value, the non-contact IC card is damaged. That is, in the card with the skimming preventive function according to the present invention, it is necessary to use the metal thin plate having such a decay ratio as to reduce the magnetic intensity to 1/3 or less.

In view of this respect, the following experiments 1 to 3 were conducted in order to find out a metal suitable for the card with the skimming preventive function of the present invention.

<Experiment 1>

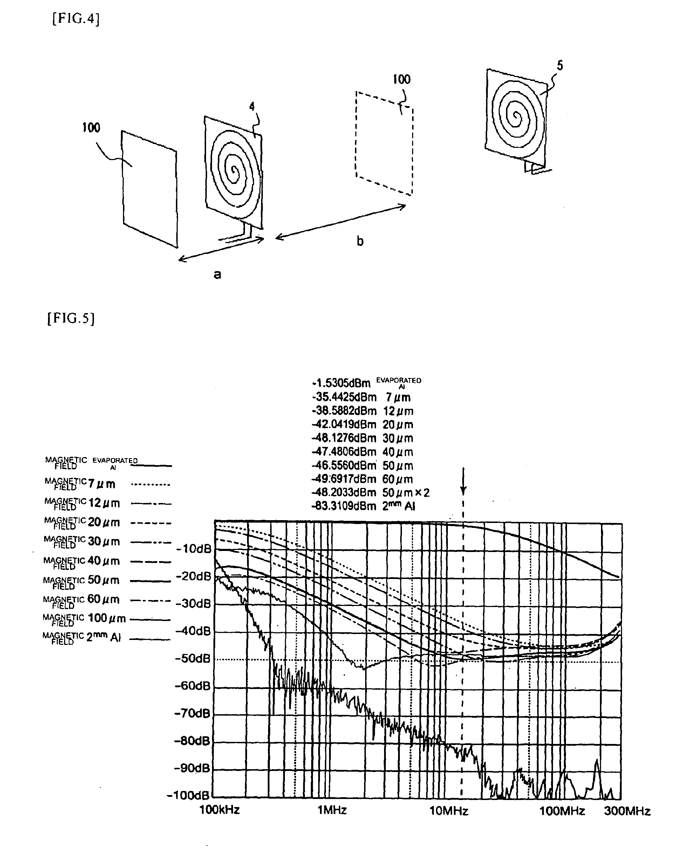

First, an experiment was conducted using ferrite which was a metal having micro generation of an eddy current as shown in FIG. 4. A reception antenna 4 was installed away from a transmission antenna 5, and decay ratios were checked for a case where a ferrite test piece 100 was disposed between the reception antenna 4 and the transmission antenna 5 (the inside) and a case where the ferrite test piece 100 was disposed behind the reception antenna 4 (the outside). Measured values of the antenna coil 4 are shown in Table 1.
[Table 1]

| Shield material position (mm) | | Measured value dBm | Converted value dB |
|---|---|---|---|
| | | Ferrite | Ferrite |
| Inside | -8.6 | -20.51 | -1.12 |
| | -7.6 | -20.50 | -1.10 |
| | -6.6 | -20.52 | -1.13 |
| | -5.6 | -20.54 | -1.15 |
| | -4.6 | -20.38 | -0.99 |
| | -3.6 | -20.41 | -1.02 |
| | -1 | -20.45 | -1.05 |
| | -1.6 | -20.16 | -0.76 |
| Outside | 0 | -16.55 | 2.85 |
| | 1 | -17.39 | 2.01 |
| | 2 | -17.62 | 1.78 |
| | 3 | -18.06 | 1.34 |
| | 4 | -18.08 | 1.31 |
| | 5 | -18.24 | 1.16 |
| | 6 | -18.35 | 1.05 |
| | 7 | -18.44 | 0.95 |

In Experiment 1, the ferrite test piece 100had a thickness of 0.5 mm, substrates (the reception antenna 4 and the transmission antenna 5) had a thickness (d) of 1.6 mm, an installation interval (L) between the substrates or the reception antenna 4 and the transmission antenna 5 was 25 mm, a measured value at a time when the test piece 100 was not disposed was -19.3961 dBm, and a frequency was 13.56 MHz. It is to be noted that this frequency value is equal to that of an operation frequency of the non-contact IC card according to IS014443.
In Table 1, the "inside" of a "shield material position" indicates a distance <a> from the reception antenna 4 to the test piece 100 shown in FIG. 4, and the "outside" indicates a distance <b> from the reception antenna 4 to the test piece 100. Moreover, measured values (dBm) and values converted into decibel values (dB) of decay ratios are shown side by side.
According to Table 1, it is seen that, when ferrite is interposed internallyor between the reception antenna 4 and the transmission antenna 5, it shows a magnetic field shielding effect. However, when ferrite is disposed externally or behind the reception antenna 4, a magnetic field is amplified.
Thus, Experiment 1 shows that ferrite or a metal having an only small eddy current generated therein cannot prevent skimming. On the contrary, such a metal may foster the skimming and therefore cannot be used in the card 1 of the present invention.

<Experiment 2>

Next, to check a magnetic decay ratio in accordance with a thickness of a metal, changes of the magnetic decay ratio were measured by a KEC process. Aluminum plates having different thicknesses including a plate of evaporated aluminum and a 2 mm thick aluminum plate were used. FIG. 5 shows the measurement result. The ordinate indicates the decay ratio, and the abscissa indicates a frequency.

It is seen from FIG. 5 that at the above-mentioned frequency of 13.56 MHz, the decay ratio of aluminum generally increases as the thickness of aluminum increases. Therefore, it is supposed that when a thick aluminum plate is used for a metal thin plate 2 in a card 1 of the present embodiment, a high skimming preventive effect can be provided.

However, the card 1 of the present invention needs to be carried together with a non-contact IC card. Then, it is preferable that the card has such a thickness as to be conveniently stored in, for example, a wallet. In light of this, and considering that decorative plates 3a, 3b are subjected to lamination processing, a thickness of the metal thin plate is set to 100 $\mu$m at maximum. Since measurement by a KEC process is performed in a radio wave dark room, a result of Experiment 2 might be different from an actual use situation. Therefore, following Experiment 3 was conducted.

<Experiment 3>

It is considered from Experiment 2 to use aluminum for a metal thin plate 2 of a card 1 of the present invention. In this regard, the experiment was conducted in the same manner as in Experiment 1 but using an aluminum plate. That is, as shown in FIG. 4, decay ratios were measured for a case where an aluminum test piece 100 was disposed between a reception antenna 4 and a transmission antenna 5 installed away from each other (inside) and a case where an aluminum test piece 100 was disposed behind the reception antenna 4 (outside). The result is shown in Table 2.

[Table 2]

| Shield material position (mm) | | Measured value dBm | Converted value dB |
|---|---|---|---|
| | | Aluminum material | Aluminum material |
| Inside | -8.6 | -29.84 | -10.45 |
| | -7.6 | -29.91 | -10.52 |
| | -6.6 | -30.25 | -10.86 |
| | -5.6 | -30.54 | -11.14 |
| | -4.6 | -31.10 | -11.71 |
| | -3.6 | -31.13 | -11.73 |
| | -1 | -31.33 | -11.93 |
| | -1.6 | -32.36 | -12.96 |
| Outside | 0 | -30.09 | -10.69 |
| | 1 | -28.13 | -8.73 |
| | 2 | -26.74 | -7.34 |
| | 3 | -25.13 | -5.74 |
| | 4 | -23.95 | -4.55 |
| | 5 | -23.20 | -3.80 |
| | 6 | -22.57 | -3.17 |
| | 7 | -22.07 | -2.67 |

In Experiment 3, the aluminum test piece 100 had a thickness of 35 $\mu$m, a substrate thickness (d) was 1.6 mm, an installation interval (L) between substrates or between the reception antenna 4 and the transmission antenna 5 was 25 mm, a measured value at a time when no test piece 100 was disposed was -19.3961 dBm, and a frequency was 13.56 MHz.

According to Table 2, in either of a case where aluminum is interposed inside or between the reception antenna 4 and the transmission antenna 5 and a case where aluminum is disposed outside or behind the reception antenna 4, aluminum exhibits a shield effect of a magnetic field. Especially, the example in which an inside position is -1.6 mm indicates a converted value of -12.96dB and the example in which an outside position is 0 mm indicates a converted value of -10.69 dB. Even assuming that there is a measurement error of about 1 dB, the respective converted values are -11.96 dB and -9.69 dB. That is to say that a high decay ratio is obtained at a time when the aluminum test piece 100 is installed in the vicinity of the reception antenna 4 regardless of whether the test piece is installed inside or outside the reception antenna.

FIG. 5 shows a graph of values shown in Tables 1 and 2. In the drawing, the ordinate indicates the converted value (dB) of the decay ratio. Assuming that 0 is the position of the reception antenna 4, the abscissa indicates a positive value as a distance <a> from the reception antenna 4 to the test piece 100 disposed inside, and a negative value as a distance <b> from the reception antenna 4 to the test piece 100 disposed outside. It is seen that aluminum indicates a high decay ratio when disposed in the vicinity of the reception antenna.

Experiments 1 to 3 has shown that aluminum is a suitable metal for use in the metal thin plate 2 in a case where an effect of preventing the skimming is to be obtained by a function of an eddy current.

Subsequently, availability of a metal other than aluminum will be investigated. Table 3 shows conductivities, relative magnetic permeabilities and surface depths at a frequency of 10 MHz of metals such as gold, silver, copper and aluminum.

[Table 3]

|  | Conductivity (S/m) | Specific magnetic permeability | Surface depth |
|---|---|---|---|
| Gold | 4.10E+07 | 0.99660 | 0.0249 |
| Silver | 6.10E+07 | 0.99998 | 0.0204 |
| Copper | 5.80E+07 | 0.99999 | 0.0209 |
| Aluminum | 4.00E+07 | 1.00002 | 0.0252 |

As described above, the eddy current changes with the thickness, specific magnetic permeability and electric conductivity of the metal. Therefore, it is supposed from the values shown in Table 3 that gold, silver and copper when used for the metal thin plate 2 of the present invention achieve more beneficial effects than aluminum.

In any case of the metals above, the card 1 includes the decorative plates 3a, 3b on front and back surfaces of the metal thin plate 2. It is possible to print desired characters and pictures including advertisements of a company name, a commodity name and the like, a commemorative picture and etc.on these decorative plates 3a, 3b. The prepared card 1 can be distributed in the same manner as in a conventional promotion card. For example, when the cards are distributed, for example, in financial institutions, the skimming can more effectively be prevented.

Now, one embodiment of a card holder according to the present invention will be described.

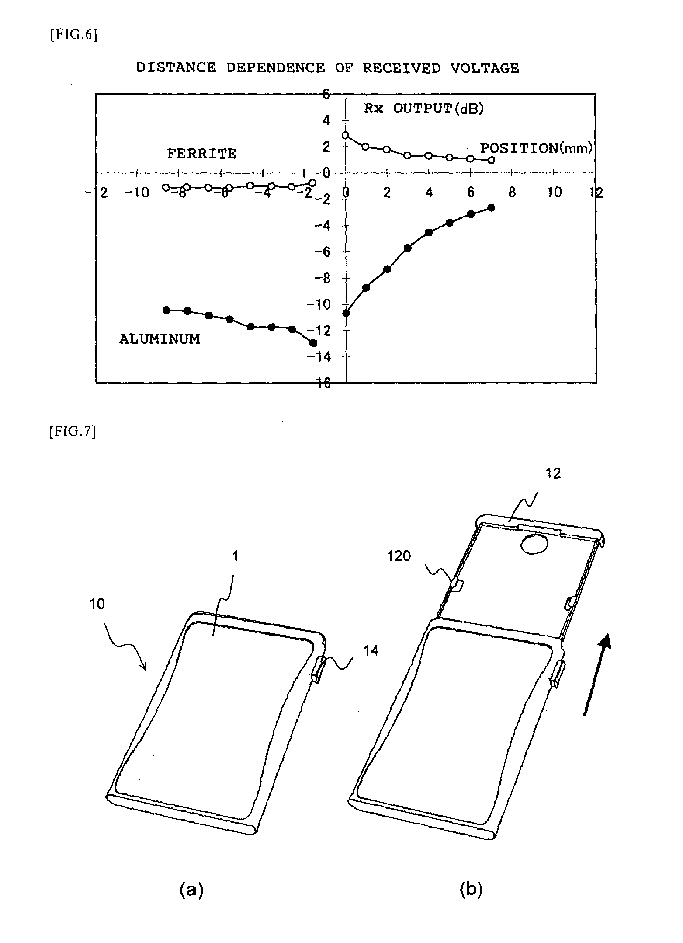

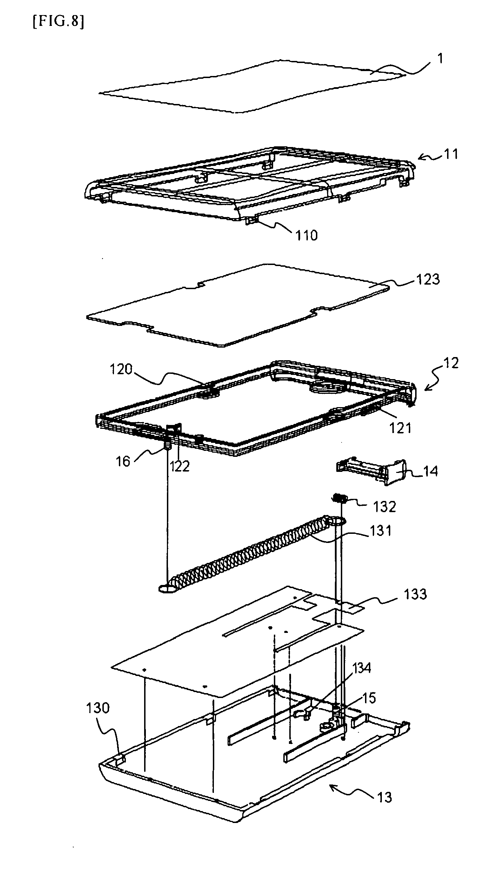

FIGS. 7 and 8 are a perspective view and an exploded perspective view of a card holder 10 according to the present invention. As shown in FIG. 8, the card holder 10 is formed by combining a lid portion 11, a slide portion 12 and a bottom portion 13. The lid portion 11 has six claws 110 at both sides thereof. An upper surface of the lid portion 11 is provided with a groove 112 along an inner edge of the upper surface so that the card 1 having the above-mentioned skimming preventive function can be fitted into the groove 112.

The bottom portion 13 includes six concave parts 130 corresponding to the claws 110 of the lid portion 11. To assemble the case 10, the claws 110 are fitted into the concave parts 130. The metal plate 133, identical to the metal thin plate 2 used in the card 1 having the skimming preventive function, is bonded to the bottom portion 13. Moreover, the metal plate 133 is provided with a first spring 131, a second spring 132 and a button 14 which cooperates with the second spring 132. In the present embodiment, the metal plate 133 is an aluminum plate. One end of the first spring 131 is engaged with a pillar (A) 15 of the bottom portion 13, while the other end thereof is engaged with a pillar (B) 16 disposed at the slide portion 12. When the holder 10 is closed, the first spring 131 expands.

The slide portion 12 is formed to be slightly smaller than the lid portion 11 and the bottom portion 13, and has holding claws 120 and a stopper 121. When the non-contact IC card 4 is mounted on the slide portion 12, the holding claws 120 hold this card 4 so that the card does not move or fall. Moreover, a ferrite plate 123 is bonded to the slide portion 12.

The card holder 10 is carried in a closed state as shown in FIG. 7(a). At this time, the card 1 prepared using the thin plate 2 of aluminum is fitted onto the upper surface of the holder 10, and a bottom surface of the holder 10 is provided with the aluminum plate 133 bonded to the bottom portion 13. The non-contact IC card 4 is interposed between these aluminum plates. Accordingly, the card 4 does not start in spite of a magnetic field from the reader 5 or a skimmer.

On the other hand, the card holder 10 is used in an open state as shown in FIG. 7(b). In the closed state, when a user depresses the button 14, the first stopper 121 of the slide portion 12 fastened to this button 14 is detached and the expanded first spring 131 contracts. In consequence, the urged slide portion 12 jumps out of a container consisting of the lid portion 11 and the bottom portion 13, and the non-contact IC card 4 becomes usable. Since a second stopper 122 of the slide portion 12 is caught in a stopper receiving portion 134 of the bottom portion 13, the slide portion 12 is not detached or separated from the card holder 10. The button 14 is urged by the second spring 132 to return to an original position.

Here, as described above, the ferrite plate 123 is bonded to the slide portion 12. This respect will be described in detail.

As apparent from Experiment 1, ferrite has an effect of fostering the reading of the non-contact IC card 4, when receiving the magnetic field from the reader 5. By bonding the ferrite plate 123 to the slide portion 12, it is possible for the reader 5 to surely read information recorded in the non-contact IC card 4 contained in the card holder 10when the card 4 is used. To further clarify such an effect of ferrite, an experiment was conducted again using ferrite plates having different thicknesses and relative magnetic permeabilities as shown in FIG. 4.

<Experiment 4>

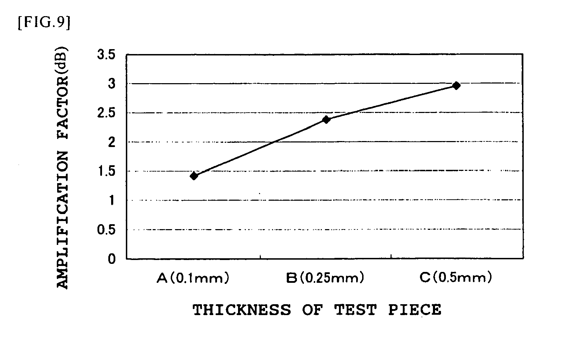

First, to find out a relation between an effect of a non-contact IC card 4 which fosters the reading of the information and the thickness, ferrite test pieces 100 having different thickness were brought into close contact with a back surface (outside) of the reception antenna 4 to measure an amplification factor in a case where the antenna received a magnetic field from a reader 5. As a result, values shown in Table 4 were obtained. A graph of these values is shown in FIG. 9.

[Table 4]

| Test piece | Thickness (mm) | Amplification factor |
|---|---|---|
| A | 0.1 | 1.4141 |
| B | 0.25 | 2.3766 |
| C | 0.5 | 2.9576 |

It is seen from Table 4 and FIG. 7 that the amplification factor increases as the test piece 100 of film becomes thicker. That is, there is a proportionality relation between the thickness of the film plate and the amplification factor.

<Experiment 5>

Next, to find out a relation between an effect of fostering the reading of information from a non-contact IC card 4 and a relative magnetic permeability, an amplification factor was measured in a case where ferrite test pieces 100 having different specific magnetic permeability were brought into close contact with a rear surface (the outside) of a reception antenna 4 to receive a magnetic field from a reader 5 was measured. As a result, values shown in Table 5 were obtained.

[Table 5]

| Test piece | Thickness (mm) | Specific magnetic permeability | Amplification factor (dB) | Converted amplification factor with respect to thickness of 0.1 mm | Converted amplification factor/specific magnetic permeability (dB/ ($\mu$•mm)) |
|---|---|---|---|---|---|
| D | 0.4 | 13 | 1.3047 | 0.32618 | 0.2509 |
| E | 0.25 | 25 | 1.7264 | 0.69056 | 0.2762 |
| F | 0.25 | 35 | 2.5486 | 1.01944 | 0.2913 |
| G | 0.25 | 40 | 2.3766 | 0.95064 | 0.2377 |

(continued)

| Test piece | Thickness (mm) | Specific magnetic permeability | Amplification factor (dB) | Converted amplification factor with respect to thickness of 0.1 mm | Converted amplification factor/specific magnetic permeability (dB/ ($\mu$•mm)) |
|---|---|---|---|---|---|
| H | 0.1 | 60 | 1.6439 | 1.64390 | 0.2740 |
| | | | | | Average 0.2660 |

It has been clarified from previous Experiment 4 that there is a proportionality relation between the thickness of the ferrite plate and the amplification factor. In Experiment 5, the ferrite plates have different thicknesses, while converted amplification factors are obtained for test pieces D, E, F and B with respect to a thickness of 0.1 mm and indicated as an amplification factor with an equal thickness.

Here, taking a closer look at the specific magnetic permeability and the converted amplification factor, it is seen that the value indicated as the converted amplification factor generally increases as the relative magnetic permeability increases. That is, it can be said that there is a proportionality relation between the specific magnetic permeability and the amplification factor of ferrite. A value (an average value) of a proportionality conestant obtained by dividing the converted amplification factor by the relative magnetic permeability is 0.26260.

As described above, a maximum magnetic intensity according to IS014443 is 12 A/m. Since the maximum magnetic intensity generated by a high output type IC card reader is 10 A/m, an amplification factor to amplify this intensity to 12A/m is 1.584 dB. On the other hand, the maximum magnetic intensity generated by many IC card readers for general use is 7.5 A/m, and an amplification factor to amplify this intensity to 12A/m is 4.082 dB. To calculate the proportionality constant, it is considered that there is a fluctuation of about $\pm$10% depending on the test piece. In this case, the minimum amplification factor is 1.425 dB (1.584 dB x 90%) and the maximum amplification factor is 4.490 dB (4.082 dB x 110%).

Therefore, a range of the amplification factor of the ferrite plate suitable for use in the present invention can be represented by the following equation (1):

$$1.584 \text{ dB} \leq 0.2660 \times \mu r \times t \leq 4.082 \text{ dB} \quad (1),$$

where $\mu$r is the specific magnetic permeability, and t is the thickness.

To calculate the proportionality constant, it is considered that there is a fluctuation of about $\pm$10% depending on the test piece. In this case, the minimum proportionality constant is 0.2394 (0.2660 x 90%) and the maximum proportionality constant is 0.2926 (0.266 x 110%).

In consideration of this, the following equation (2) is applicable:

$$5.413 \leq \mu r \times t \leq 17.050 \quad (2).$$

However, when the proportionality constant is set to a maximum value of 0.2926 in order to prevent the IC card from being damaged, the following equation (3) is applicable:

$$5.413 \leq \mu r \times t \leq 13.950 \quad (3).$$

Thus, in a case where the ferrite plate in which a product of the specific magnetic permeability and the thickness (mm) is a value in a range of the equation (3) is used according to a type of the reader, efficient communication can be performed without damaging the non-contact IC card.

As already shown in Table 2, when the ferrite plate is disposed outside the reception antenna 4, the magnetic field is amplified. Therefore, in a case where the non-contact IC card 4 contained in the card holder 10 is used, it is preferable that the holder 10 is brought into the open state, and held up against the reader 5 so that the surface of the holder 10 on the side of the lid portion 11 faces the transmission antenna. Since the magnetic field is amplified by the ferrite plate 123 positioned behind the card 4, the information recorded in the IC card 4 can smoothly be read. At this time, to the convenience for the user, a communicable distance between the IC card 4 and the reader 5 increases. Table 6 shows the communicable distances in a case where the non-contact IC card is used alone and in a case where ferrite is brought into close contact with the card (in Table 6, test pieces IRL05AB, IVN06 and IRLF4AB (0.1) are products of TDK Kabushiki Kaisha).

[Table 6]

| Test piece | Communicable distance | Amplification factor |
|---|---|---|
| (Only card) | 16.98mm | 100.0% |
| IRL05AB | 23.00mm | 135.4% |
| IVM06 | 21.03mm | 123.8% |
| IRL04AB(0.1) | 24.05mm | 141.6% |

After the card holder 10 has been used, the slide portion 12 is pushed into the container by hand etc., and the holder 10 then returns to the closed state.

As described above, according to the card 1 of the present invention with the skimming preventive function for the RFID, when the card is carried together with an RFID card such as the non-contact IC card, it is possible to prevent a situation in which the information stored in the non-contact IC card is illegally read while this is unnoticed by the user.

Furthermore, according to the card holder of the present invention, the holder 10 is carried in the closed state in which the slide portion 12 is stored in the container. In consequence, the card 1 attached to the upper surface of the lid portion 11 and the aluminum plate 133 bonded to the bottom portion 13 provide the skimming preventive function. When the holder is used, the slide portion 12 moves to bring the holder into the open state. The non-contact IC card 4 then is not completely nipped between the card 1 and the aluminum plate 133, and a large positional deviation is generated. As a result, the IC card 4 is started by the magnetic field from the reader, and the stored information can be read. Simply by depressing the button 14, the non-contact IC card can temporarily be read if necessary. Therefore, the card can conveniently and quickly be brought into use, for example, when the user passes an entrance gate of a public transportation facility or the like. After the use, the slide portion 12 is pushed back into the container to bring the holder 10 into the closed state. In consequence, the skimming can be prevented again.

Moreover, in a case where, for example, the back surface of the slide portion 12 is provided with the advertisement, the user and other persons see the advertisement during the use of the card holder 10, so that the promotion effect can be exhibited.

It is to be noted that the card 1 to be attached to the holder 10 is replaceable. The user can attach the card having different printing on the surface thereof to achieve a highly decorative card holder.

The present invention has been described in reference to the card holder in which only one non-contact IC card 4 is stored. However, the present invention is not limited to this card holder, and can be structured so that a plurality of cards can be stored. Alternatively, not only the non-contact IC card but also another card such as a name card can also be stored.

**Claims**

1. A card with a skimming preventive function for RFID, arranged close to one of a front surface and a back surface of a non-contact IC card provided with a cryptographic coprocessor and comprising a metal thin plate and decorative plates formed on front and back surfaces of the metal thin plate by lamination processing,
   wherein the metal thin plate has a thickness of 35 to 100 $\mu$m, generates an eddy current at a time when a magnetic field at a frequency of 13.56 MHz is applied regardless of whether the card is arranged on the front surface or the back surface of the non-contact IC card provided with the cryptographic coprocessor, cancels the magnetic field by a diamagnetic field generated by the eddy current, and has a magnetic intensity decay ratio of -9.54 dB or less to inhibit start-up of the cryptographic coprocessor.

2. The card with the skimming preventive function for the RFID according to claim 1, wherein the metal thin plate is made of one of gold, silver, copper and aluminum.

3. The card with the skimming preventive function for the RFID according to claim 1 or 2, wherein the decorative plates are made of polyethylene terephthalate (PET) or polyvinyl chloride (PVC).

4. The card with the skimming preventive function for the RFID according to any one of claims 1 to 3, the front surface and/or the back surface of the card is capable of being provided with printing.

5. A card holder to which a card provided with a skimming preventive function for RFID is attached to prevent illegal reading of the RFID from a non-contact IC card provided with a cryptographic coprocessor kept therein, the card comprising: a metal thin plate having a thickness of 35 to 100 μm, being configured to generate an eddy current at a time when a magnetic field at a frequency of 13.56 MHz is applied and cancel the magnetic field by a diamagnetic field generated by the eddy current, and having a magnetic intensity decay ratio of -9.54 dB or less to inhibit start-up of the cryptography coprocessor; and decorative plates formed on front and back surfaces of the metal thin plate by lamination processing,
the card holder comprising, in a container consisting of a lid portion and a bottom portion and having an opening: a slide portion movable in a direction of the opening; urging means which has opposite end portions each of which engaged with the bottom portion and the slide portion and which moves the slide portion; and a stopper which stops the movement of the slide portion at a predetermined position in the container,
wherein the card with the skimming preventive function for the RFID is attached to the lid portion, a metal thin plate identical to that for use in the card with the skimming preventive function for the RFID is attached to the bottom portion, and a ferrite plate is attached to the slide portion, in an open state in which the slide portion has been moved, the ferrite plate fosters reading of the RFID by a reader, and in a closed state in which the slide portion is stored in the container, the card with the skimming preventive function for the RFID and the metal thin plate prevent the reading of the RFID.

6. The card holder according to claim 5, wherein the ferrite plate to be attached to the slide portion has an amplification factor of 1.584 dB to 4.082 dB.

**Amended claims under Art. 19.1 PCT**

1. A card with a skimming preventive function for RFID comprising a metal thin plate and decorative plates formed on front and back surfaces of the metal thin plate by lamination processing,
wherein the metal thin plate has a thickness of 35 to 100 μm, having a magnetic intensity decay ratio of -9.54 dB or less at a frequency of 13.56 MHz according to measurement of ISO/IEC 10373.

2. The card with the skimming preventive function for the RFID according to claim 1, wherein the metal thin plate is made of one of gold, silver, copper and aluminum.

3. The card with the skimming preventive function for the RFID according to claim 1 or 2, wherein the decorative plates are made of polyethylene terephthalate (PET) or polyvinyl chloride (PVC).

4. The card with the skimming preventive function for the RFID according to any one of claims 1 to 3, the front surface and/or the back surface of the card is capable of being provided with printing.

5. A card holder to which a card provided with a skimming preventive function for RFID is attached to prevent illegal reading of the RFID from a non-contact IC card kept therein, the card comprising: a metal thin plate having a thickness of 35 to 100 μm, having a magnetic intensity decay ratio of -9.54 dB or less at a frequency of 13.56 MHz according to measurement of ISO/IEC 10373; and decorative plates formed on front and back surfaces of the metal thin plate by lamination processing,
the card holder comprising, in a container consisting of a lid portion and a bottom portion and having an opening: a slide portion movable in a direction of the opening; urging means which has opposite end portions each of which engaged with the bottom portion and the slide portion and which moves the slide portion; and a stopper which stops the movement of the slide portion at a predetermined position in the container,
wherein the card with the skimming preventive function for the RFID is attached to the lid portion, a metal thin plate identical to that for use in the card with the skimming preventive function for the RFID is attached to the bottom portion, and a ferrite plate is attached to the slide portion, in an open state in which the slide portion has been moved, the ferrite plate fosters reading of the RFID by a reader, and in a closed state in which the slide portion is stored in the container, the card with the skimming preventive function for the RFID and the metal thin plate prevent the reading of the RFID.

**6.** The card holder according to claim 5, wherein the ferrite plate to be attached to the slide portion has an amplification factor of 1.584 dB to 4.082 dB.

[FIG.1]

[FIG.2]

[FIG.3]

[FIG.4]

[FIG.5]

-1.5305dBm EVAPORATED Al
-35.4425dBm 7 μm
-38.5882dBm 12 μm
-42.0419dBm 20 μm
-48.1276dBm 30 μm
-47.4806dBm 40 μm
-46.5560dBm 50 μm
-49.6917dBm 60 μm
-48.2033dBm 50 μm × 2
-83.3109dBm 2ᵐᵐ Al

MAGNETIC EVAPORATED Al
FIELD

MAGNETIC 7 μm ..........
FIELD

MAGNETIC 12 μm ——·—
FIELD

MAGNETIC 20 μm ------
FIELD

MAGNETIC 30 μm ——··——
FIELD

MAGNETIC 40 μm —— ——
FIELD

MAGNETIC 50 μm ————
FIELD

MAGNETIC 60 μm ——·——
FIELD

MAGNETIC 100 μm ————
FIELD

MAGNETIC 2ᵐᵐ Al ————
FIELD

14

[FIG.6]

## DISTANCE DEPENDENCE OF RECEIVED VOLTAGE

[FIG.7]

(a)                                                    (b)

[FIG.8]

[FIG.9]

THICKNESS OF TEST PIECE

## INTERNATIONAL SEARCH REPORT

| | |
|---|---|
| International application No. | |
| PCT/JP2006/303172 | |

| A. CLASSIFICATION OF SUBJECT MATTER |
|---|
| *G06K19/00*(2006.01), *B42D15/10*(2006.01), *G06K19/07*(2006.01), *G06K19/073* (2006.01) |
| According to International Patent Classification (IPC) or to both national classification and IPC |

| B. FIELDS SEARCHED |
|---|
| Minimum documentation searched (classification system followed by classification symbols) <br> *G06K19/00*(2006.01), *B42D15/10*(2006.01), *G06K19/07*(2006.01), *G06K19/073* (2006.01) |

| Documentation searched other than minimum documentation to the extent that such documents are included in the fields searched |
|---|
| Jitsuyo Shinan Koho     1922–1996    Jitsuyo Shinan Toroku Koho   1996–2006 <br> Kokai Jitsuyo Shinan Koho   1971–2006    Toroku Jitsuyo Shinan Koho    1994–2006 |

| Electronic data base consulted during the international search (name of data base and, where practicable, search terms used) |
|---|
| |

| C. DOCUMENTS CONSIDERED TO BE RELEVANT | | |
|---|---|---|
| Category* | Citation of document, with indication, where appropriate, of the relevant passages | Relevant to claim No. |
| X <br> A | JP 11-184993 A (Kokusai Electric Co., Ltd.), <br> 09 July, 1999 (09.07.99), <br> Par. Nos. [0025] to [0031]; Figs. 7 to 10 <br> (Family: none) | 1-4 <br> 5,6 |
| A | JP 2003-336166 A (Konica Minolta Holdings Kabushiki Kaisha), <br> 28 November, 2003 (28.11.03), <br> Par. No. [0047] <br> (Family: none) | 1-6 |
| A | JP 2003-164312 A (Kabushiki Kaisha Ramoda Yoshida), <br> 10 June, 2003 (10.06.03), <br> Par. Nos. [0020] to [0022]; Figs. 7 to 9 <br> (Family: none) | 1-6 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search <br> 09 May, 2006 (09.05.06) | Date of mailing of the international search report <br> 16 May, 2006 (16.05.06) |
|---|---|
| Name and mailing address of the ISA/ <br>     Japanese Patent Office | Authorized officer |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3058730 B
- JP 3066214 B
- JP 3106094 B